Europäisches Patentamt

European Patent Office

Office européen des brevets

(11) Veröffentlichungsnummer: **0 292 921**
**A2**

## EUROPÄISCHE PATENTANMELDUNG

(21) Anmeldenummer: 88108275.4

(22) Anmeldetag: 24.05.88

(51) Int. Cl.4: **A47B 91/02**

(30) Priorität: 25.05.87 DE 3717524

(43) Veröffentlichungstag der Anmeldung:
30.11.88 Patentblatt 88/48

(84) Benannte Vertragsstaaten:
AT BE CH DE ES FR GB GR IT LI LU NL SE

(71) Anmelder: G. UNTERHOLZNER INNENAUSBAU OHG
Handwerkerzone
I-39025 Naturns(IT)

(72) Erfinder: Unterholzner, Heinrich
Hauptstrasse
I-39025 Naturns(IT)

(74) Vertreter: Strasse, Joachim, Dipl.-Ing. et al
Strasse und Stoffregen European Patent
Attorneys Zweibrückenstrasse 17
D-8000 München 2(DE)

(54) Einbaubeschlag zum Verbinden oder Ausrichten von Inneneinrichtungselementen.

(57) Es wird ein Einbaubeschlag 10 zum Verbinden oder Ausrichten von Inneneinrichtungselementen mit einem Kegelradgetriebe beschrieben. Ein erstes Kegelrad 36 bewegt über sein Innengewinde 34 eine mit Außengewinde 32 versehene Stange 30, welche ein beweglicher Stützfuß ist oder als bewegliches Verbindungselement benutzt werden kann. Der Antrieb des ersten Kegelrades 36 erfolgt über ein nicht zum Beschlag gehörendes zweites Kegelrad 50, welches als Werkzeug in eine vorzugsweise auf beiden Seiten des Beschlages vorgesehene Vertiefung 40 eingesetzt werden kann und welches über ein Fenster 42 in der Vertiefung mit dem ersten Kegelrad 36 in Verbindung gebracht werden kann. Das zweite Kegelrad 50 kann als Einsatzwerkzeug in elektrisch oder pneumatisch betriebene Handwerkzeuge 60 aufgenommen werden.

Fig. 6

## Einbaubeschlag zum Verbinden oder Ausrichten von Inneneinrichtungselementen

Die vorliegende Erfindung bezieht sich auf einen Einbaubeschlag zum Verbinden oder Ausrichten von Inneneinrichtungselementen mit einer im Beschlag bewegbaren Stange. Diese Stange kann als ein verstellbarer Standfuß oder als längsbewegliches Verbindungselement benutzt werden. Es ist bekannt, die Stange mit einem Außengewinde in ein Innengewinde eines Zahnrades zu stecken und das Zahnrad von außen über eine miteingebaute Schnecke, die mit einem Schlüssel oder ähnlichem Werkzeug von außen her in Drehung versetzt werden kann, zu bewegen. Es ist auch bekannt, das Zahnrad als ein erstes Kegelrad mit einem im Beschlag fest eingebauten zweiten Kegelrad so anzutreiben, daß in das zweite Kegelrad ein Werkzeug eingesteckt werden kann, um Verstellbewegung in dem Beschlag einzuleiten. Eine solche Konstruktion mit zwei Kegelrädern ist beispielsweise aus der DE-OS 35 20 789 bekannt. Dieser Beschlag weist jedoch infolge des in dem Beschlag befindlichen Kegelradgetriebes eine Außenkonfiguration auf, die ein Einfräsen in das Möbelelement oder ein Aufsetzen auf das Möbelelement erforderlich macht. Diese beiden Montagevorgänge sind zeitaufwendig oder platzraubend. Außerdem beinhaltet das bekannte Stell- oder Verbindungselement sehr viele Teile, so daß es teuer ist und bestimmte Mindestabmessungen nicht unterschreiten kann. Dieser bekannte Beschlag zeigt bereits die Möglichkeit, in ein Flächenelement eingesetzt zu werden, wobei das Verstellwerkzeug von beiden Seiten des flächigen Elementes eingeführt werden kann. Hierbei schneidet die Durchgriffsöffnung für das Verstellwerkzeug von der einen Seite in das antreibende Kegelrad die Öffnung für die Verstellstange, so daß die Verstellstange nur kurz ausgebildet sein kann. Die Verstellstange muß ausschließlich im Beschlag gehaltert werden, was zu großen Momenten führt, die auf den Beschlag und seine Befestigung in dem Plattenelement große Kräfte ausübt. Der Beschlag muß deshalb sehr massiv ausgestaltet sein. Er eignet sich nur zum Bewegen eines kurzen Stützfußes. Querkräfte auf den Stützfuß, welche beispielsweise beim Verschieben oder Möbelrücken auftreten, führen zu den genannten Belastungen.

Es ist Aufgabe der vorliegenden Erfindung, vorstehende Gattung eines Einbaubeschlages mit zwei Kegelrädern derart weiterzubilden, daß seine Abmessungen klein gehalten werden können, daß er nur aus wenigen Teilen besteht, und daß Kräfte direkt in die Platte eingeleitet werden, ohne den Beschlag zu belasten.

Die allgemeine Lösung besteht darin, daß nur ein Kegelrad im Beschlag angeordnet ist. Das zweite Kegelrad dient als Verstellwerkzeug und ist nicht ständiger Bestandteil des Beschlages. Dadurch kann der Beschlag klein gehalten werden. Das erste Kegelrad ist über eine zur inneren Lagerung des ersten Kegelrades im Beschlag in Richtung der Achse der Verstellstange gesetzte Vertiefung erreichbar. Es ragt durch ein Fenster in die Vertiefung. Die Vertiefung ist so gestaltet, daß sie als Aufnahme für das zweite Kegelrad ausgebildet ist. Aus diesem Grunde ist die Vertiefung im wesentlichen kreisförmig. Diese Zugriffsmöglichkeit zu dem einzigen Kegelrad im Innern des Beschlages besteht auf beiden Seiten des Beschlages, da sich die Vertiefung auch auf beiden Seiten anordnen läßt.

Der ganze Beschlag hat im wesentlichen kreisförmige Konfiguration, wodurch eine leichte Montage in das Inneneinrichtungselement, beispielsweise eine beschichtete oder unbeschichtete Möbelplatte, gewährleistet ist. Die Öffnung in dem Möbelelement ist leicht mit einem Bohrer oder einer Lochsäge herstellbar. Ein weiterer Vorteil ergibt sich dadurch, daß der Beschlag auf zwei gleichen Gehäusehälften aufgebaut werden kann. Das Zusammensetzen des Beschlages erfolgt dann an Ort und Stelle. Der Beschlag besteht nur aus diesen beiden gleichförmigen Gehäusehälften und dem innen einzulegenden ersten Kegelrad. Das Kegelrad findet Aufnahme in einer in jeder Gehäusehälfte vorgesehenen kalottenförmigen Ausnehmung, in der das Kegelrad zugleich für eine freie Bewegung gelagert ist. Die zu jedem Beschlag gehörende Stange bildet das dritte Teil des Beschlages. Es wird vorteilhafterweise nicht nur in dem hierfür im Beschlag vorgesehenen Kanal geführt. Vielmehr ist dieser Kanal beliebig lang im Verbindungselement durch eine einfache Bohrung ausbildbar, um, wenn es erforderlich ist, große Kräfte über eine lange Stange direkt in das Plattenelement einzuleiten. Um die Stange gegen Verdrehen zu sichern, kann eine Vierkantstange mit quadratischem Querschnitt gewählt werden, in deren Kanten das Gewinde eingeschnitten ist, welches in das Innengewinde des in dem Beschlag befindlichen Kegelrades eingreift. Es kann aber auch eine Gewindestange mit rundem Querschnitt benutzt werden, und die Sicherung gegen Verdrehen kann durch eine Fase oder durch eine Nut mit einer entsprechenden Gegenformung im Stangenkanal des Beschlages gewährleistet sein. Das Außengewinde der Stange und das Innengewinde im Kegelrad bilden eine Selbsthemmung. Diese kann in einfacher Weise dadurch erzielt werden, daß für Kegelrad und Stange unterschiedliche Materialien, beispielsweise Kunststoff und Metall oder unterschiedliche Kunststoffe oder unterschiedliche Metalle, gewählt werden. Es entfällt die Notwendigkeit, die Selbsthemmung in ein Schneckengetriebe zu legen.

Das zweite Kegelrad kann als ein Handwerkzeug ausgebildet sein. Es kann aber auch als Einsatzwerkzeug ausgestaltet sein, das in das Bohrfutter einer elektrisch oder pneumatisch betriebenen Handbohrmaschine eingesetzt werden kann. Mit dem Rechts- oder Linkslauf dieser Bohrmaschine und durch Regelung der entsprechenden Drehzahl läßt sich die Ausrichtung des mit diesem Beschlag versehenen Möbelelements ohne jeden Kraftaufwand sehr bequem vornehmen.

Weitere Einzelheiten, Merkmale und Vorteile sowie Anwendungsmöglichkeiten gehen aus der detaillierten Beschreibung eines Ausführungsbeispiels anhand der Zeichnungen hervor. Das, was hierbei dargestellt oder beschrieben ist, ist auch dann ein Teil der vorliegenden Offenbarung, wenn die sich ergebenden Elemente oder ihre Kombination noch nicht in den Ansprüchen wiedergegeben sind.

Es zeigen

Fig. 1 eine Draufsicht, teilweise im Schnitt, auf den neuen Beschlag,

Fig. 2 eine Ansicht im wesentlichen in Richtung des Pfeiles II aus Fig. 1,

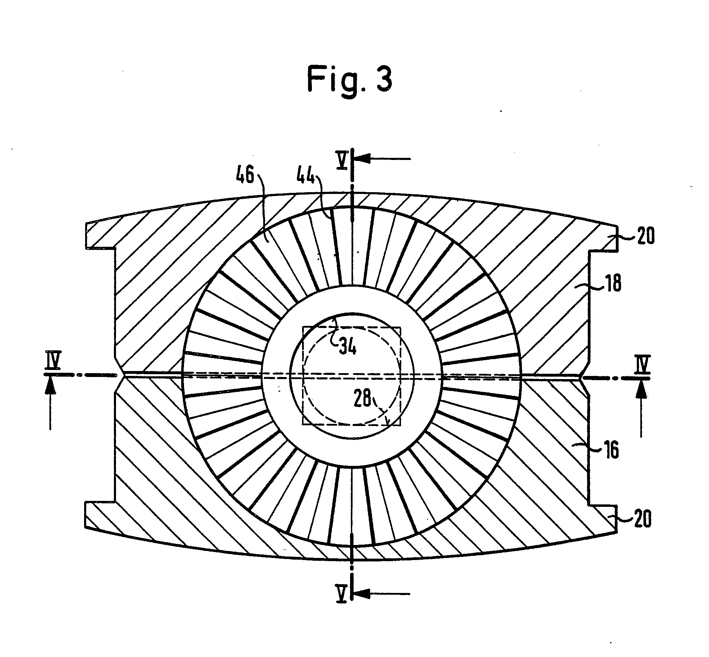

Fig. 3 einen schematischen Schnitt längs der Schnittlinie III-III in Fig. 2,

Fig. 4 einen schematischen Schnitt in der in Fig. 3 eingezeichneten Ebene in Richtung der Pfeile IV-IV,

Fig. 5 einen schematischen Schnitt längs der Schnittlinie in Fig. 3 in Richtung der Pfeile V-V und

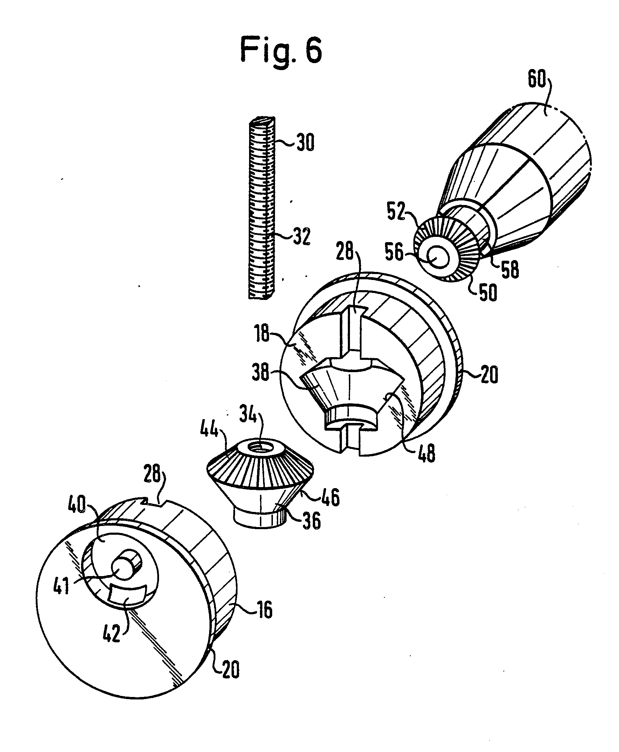

Fig. 6 eine schematische Übersicht der Teile des Beschlags zueinander in perspektivischer Darstellung.

Das zeichnerisch dargestellte Beispiel gibt einen im wesentlichen runden Einbaubeschlag 10 wieder. Der runde Beschlag 10 hat den Vorteil, daß er in eine Öffnung mit rundem Querschnitt eingesetzt werden kann und sich diese Öffnung leicht mit einem einfachen Maschinenwerkzeug, wie beispielsweise einer Bohrmaschine oder einer Rundsäge, in einer Platte anbringen läßt. Eine solche Platte ist in Form eines Brettes 12 mit einem kreisförmigen Ausschnitt 14 angededeutet. Im Ausschnitt 14 läßt sich der Beschlag 10 gemäß vorliegender Erfindung einfach einsetzen. Der Beschlag 10 kann vorteilhafterweise aus zwei Teilen 16 und 18 bestehen, die erst in der Öffnung 14 von beiden Seiten her zusammengefügt werden. Es handelt sich gemäß einem weiteren Vorteil dieser Ausführungsform um zwei identische Teile 16 und 18, was sich aus der nachstehenden Beschreibung noch näher ergibt. Die axiale Erstreckung der zusammengesetzten Teile 16 und 18 kann zweckmäßigerweise der Stärke des Bretts 12 angepaßt sein, wobei jedes Teil 16, 18 einen das Brett 12 übergreifenden Deckel 20 aufweist, der jeweils mit seinem Teil 16 bzw. 18 aus einem Stück geformt ist. Beide Teile lassen sich durch Schrauben 22 miteinander verbinden, für die Schraubenkanäle 24 vorgesehen sind. Die beiden Teile 16, 18 des Beschlags 10 können aus beliebigem Material, beispielsweise Metall oder Kunststoff, hergestellt sein. Je nach Material wird der Schraubenkanal ausgebildet. Bei einer Metallausführung kann es sich um Kanäle mit vorgeschnittenem Gewinde handeln. Bei einer Kunststoffausführung können selbstschneidende Schrauben 22 für die Verbindung benutzt werden. Auch andere Verbindungen der beiden Teile 16, 18 und das Brettes 12 sind möglich.

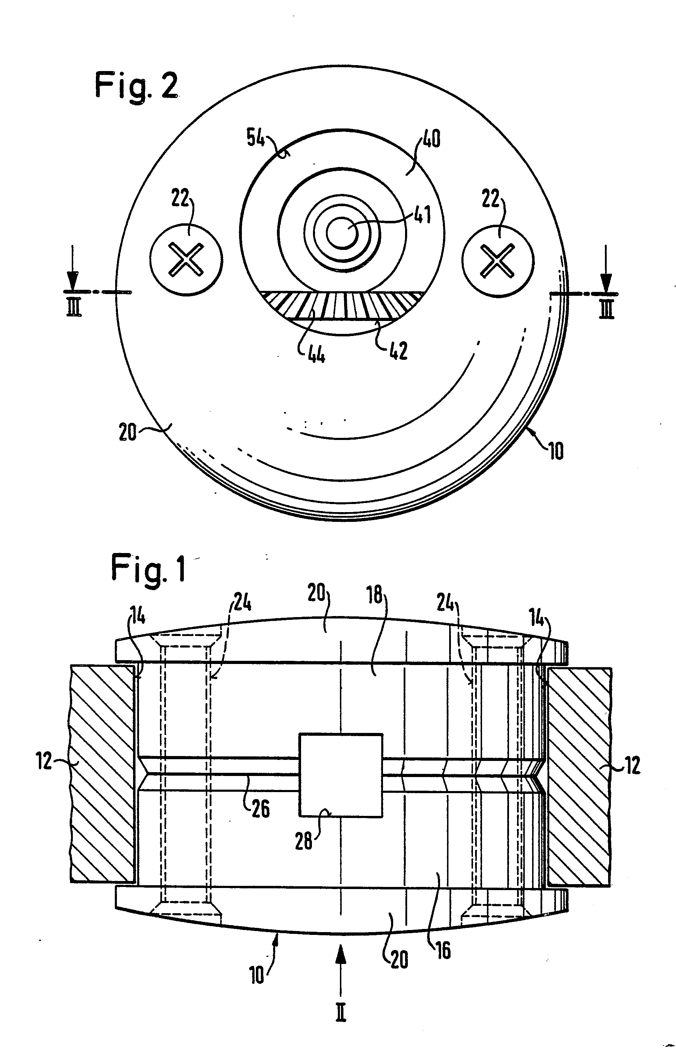

In der Mitte einer in Fig. 1 eingezeichneten Trennungsebene 26 befindet sich eine durchgehende Öffnung 28, die im vorliegenden Beispiel im wesentlichen quadratischen Querschnitt hat und die der Aufnahme der nachstehend näher beschriebenen Stange 30 dient.

In einer abgewandelten, nicht dargestellten Ausführungsform kann der Beschlag 10 auch aus einem einteiligen Element bestehen, das dann aus der Vereinigung der Teile 16 und 18 bestehen würde. Für das Einsetzen in einem Brett 12 würde einer der beiden Deckel 20 weggelassen werden, während der verbleibende Deckel 20 im Durchmesser so breit ausgeführt werden würde, daß in dem die Öffnung 14 übergreifenden Rand Befestigungsschrauben am Umfang verteilt gesetzt werden können.

In der Ansicht von Fig. 2 ist im oberen Teil eine kreisrunde Vertiefung 40 mit einem Fenster 42 erkennbar.

Die im vorliegenden Beispiel im wesentlichen als Vierkantstab mit quadratischem Querschnitt ausgebildete Stange 30 weist ein in dieser Ausführungsform nur in den Kanten eingeschnittenes Außengewinde 32 auf. Im übrigen ist die Außenform der Stange 30 der Öffnung 28 im Beschlag 10 angepaßt. Dadurch ist die Stange 30 gegen Verdrehen um die eigene Längsachse gesichert. Selbstverständlich kann diese Sicherung auch in anderer Form dargestellt werden. Beispielsweise kann die Stange 30 ein Rundstab mit Außengewinde 32 sein. Die Stange hat dann über ihre Längserstreckung eine Fasenfläche, die dann mit einer entsprechenden Fase in einem übrigen rund ausgebildeten Querschnitt der Öffnung 28 zusammenpassen würde. Es kann auch eine Nut-Federsicherung benutzt werden.

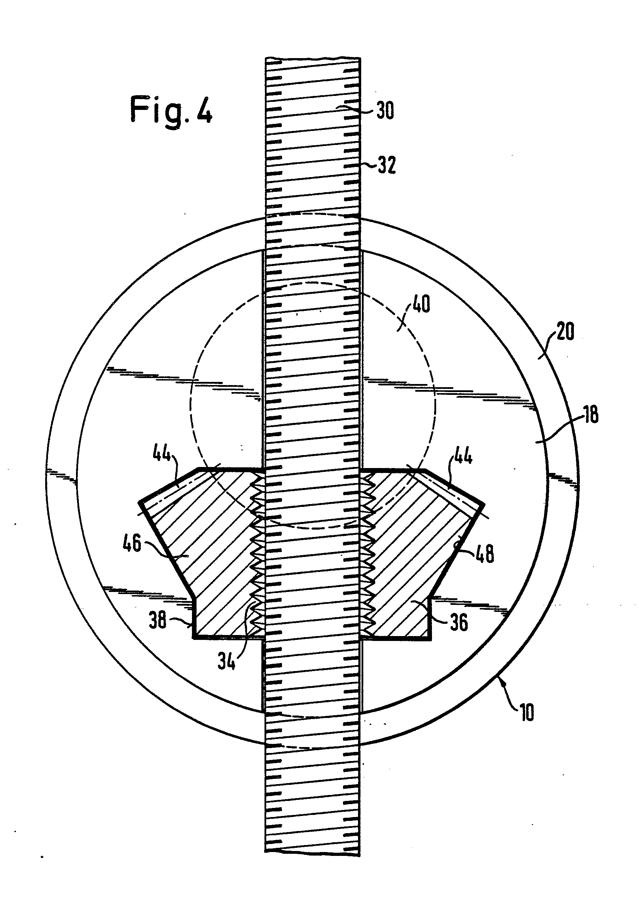

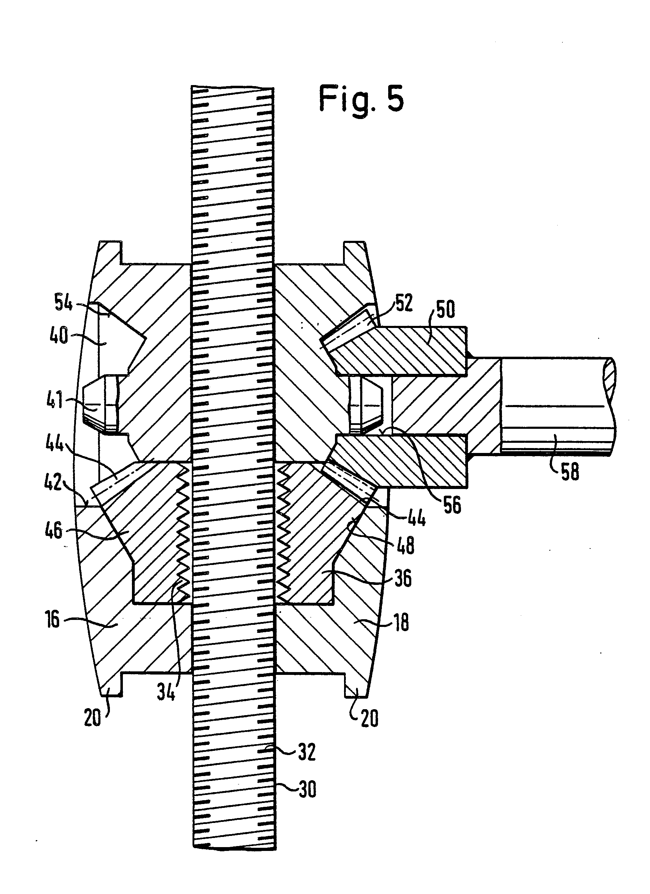

In jedem Fall ist das Außengewinde 32 durch ein angepaßtes Innengewinde 34 im ersten Kegelrad 36 geführt. Das Kegelrad 36 findet Aufnahme in den beiden Teilen 16 und 18 in einer gleichförmigen und der Außenfiguration des Kegelrads 36 angepaßten Ausnehmung 38. Die Passungen und Toleranzen sind dabei so ausgelegt, daß das Kegelrad 36 an der Ausnehmung 38 leicht beweglich ist. Das Kegelrad 36 ist mit einer kegelstumpfförmigen Verzahnung 44 und einem Stützkegel 46 versehen, der sich in der entsprechend ebenfalls kegelmantelförmigen Fläche 48 in der Ausnehmung 38 abstützt. Wie aus den Figuren 2, 4 und 5 hervorgeht, überschneiden sich die Ausnehmung 48 und die Vertiefung 40, so daß jeweils ein Teil der Verzahnung 44 des ersten Kegelrades 36 sichtbar und zugreifbar durch das Fenster 42 ragt.

Das Fenster 42 befindet sich innerhalb der Vertiefung 40, und die Vertiefung 40 dient zur zeitweisen Aufnahme eines zweiten Kegelrades 50. Das zweite Kegelrad 50 wird nur dann verwendet und eingesetzt, wenn die Stange 32 verstellt werden soll.

Das zweite Kegelrad 50 ist nicht ständiger Bestandteil des Einbaubeschlages. Einbaubeschlag weist lediglich die Vertiefung 40 zur Aufnahme des zweiten Kegelrades 50 auf. Das zweite Kegelrad 50 ist mit einer Kegelradverzahnung 52 versehen, die durch das Fenster 42 hindurch mit der entsprechenden Verzahnung 44 des Kegelrades 36 kämmt. Zur Führung dieses zweiten Kegelrades 50 würde an und für sich die entsprechende Kegelmantelfläche 54 in der Vertiefung 48 ausreichen. Zur zusätzlichen Führung kann jedoch in der Mittelachse der Vertiefung 40 ein Zapfen 41 angeordnet sein, der beim Aufstecken des zweiten Kegelrades 50 in eine Öffnung 56 im zweiten Kegelrad 50 paßt. Das zweite Kegelrad 50 kann als ein Handwerkzeug ausgebildet sein oder als ein Einsteckwerkzeug, welches in das Bohrfutter einer Bohrmaschine 60 mit Vor- und Rücklauf paßt. Zu diesem Zweck ist das zweite Kegelrad 50 mit einem Schaft 58 versehen.

Wird die Bohrmaschine 60 mit dem eingesetzten zweiten Kegelrad 50 in die Vertiefung 40 so eingefügt, daß das Mittelloch 56 auf dem Zapfen 41 sitzt, kämmt das Kegelrad 50 mit seiner Verzahnung 52 durch das Fenster 42 hindurch mit der Verzahnung 44 des ersten Kegelrades 36. Die drehzahlregelbare Drehbewegung im Rechts- oder Linkslauf der Bohrmaschine 60 überträgt sich von der Verzahnung 52 des zweiten Kegelrades 50 durch das Fenster 42 auf die Verzahnung 44 des ersten Kegelrades 36. Je nach Drehrichtung bewegt sich dadurch die Stange 30 im Beschlag 10 oben oder unten. Die Stange 30 kann hierbei vorteilhafterweise den Beschlag vollständig durchragen, da die Mittelachse im Beschlag 10 für diesen Zweck freigehalten ist und auch nicht zum Durchgriff eines Werkzeugs von der einen oder anderen Seite des Beschlages 10 her benützt werden muß. Der eigentliche Beschlag 10 kann sehr klein ausgeführt werden. Da das zweite Kegelrad 50 nicht für jeden einzelnen Beschlag vorgesehen ist, sondern als Werkzeug für viele Beschläge benutzt werden kann, wird der Beschlag in der Herstellung, im Betrieb und in der Unterhaltung kostengünstig. Durch den Einsatz eines elektrisch oder pneumatisch betriebenen Handwerkzeuges wird das Ausrichten der Stange 30 im Beschlag 10 sehr einfach.

## Ansprüche

1. Einbaubeschlag zum Verbinden oder Ausrichten von Inneneinrichtungselementen mit einer im Beschlag bewegbaren Stange, in welche zumindest teilweise ein Außengewinde eingeschnitten ist, welches mit einem Innengewinde in einem Kegelrad zusammenwirkt, dessen Kegelmantelfläche in einer kegelabschnittförmigen Ausnehmung im Beschlag gelagert ist, wobei mittels zweitem Kegelrad das erste Kegelrad antreibbar und dadurch die Stange im Beschlag längsbewegbar ist, **dadurch gekennzeichnet,** daß nur das erste Kegelrad (36) derart im Beschlag (10) angeordnet ist, daß der mit dem zweiten Kegelrad (50) kämmende Teil (44) in einem Fenster (42) in einer dem Außendurchmesser des zweiten Kegelrades (50) angepaßten kreisförmigen Vertiefung (40) in der Seitenwand des Beschlages (10) offen ist, während das zweite Kegelrad (50) lediglich als nicht mit dem Beschlag (10) verbundenes Stellwerkzeug dient.

2. Beschlag nach Anspruch 1, **dadurch gekennzeichnet,** daß die kreisförmige Vertiefung (40) mit Fenster (42) in beiden Seitenwänden des Beschlags (10) vorgesehen ist.

3. Beschlag nach Anspruch 1, **dadurch gekennzeichnet,** daß der Beschlag (10) kreisförmigen Querschnitt hat, welcher zentrisch von der Stange (30) durchdrungen ist.

4. Beschlag nach Ansprüchen 1 bis 3, **dadurch gekennzeichnet,** daß der Beschlag (10) ein Gehäuse aus zwei gleichen Gehäusehälften (16, 18) aufweist.

5. Beschlag nach Ansprüchen 1 und 2 oder 1 bis 4, **dadurch gekennzeichnet,** daß das erste Kegelrad (36) innen axial zur Stange (30) gegenüber der äußeren kreisförmigen Vertiefung (40) versetzt angeordnet ist.

6. Beschlag nach einem oder mehreren der voraufgehenden Ansprüche, **dadurch gekennzeichnet,** daß die Stange (30) einen im wesentlichen quadratischen Querschnitt (28) aufweist, in dessen Kanten das Gewinde (32) zum Eingriff in das Innengewinde (34) des ersten Kegelrades (36) eingeschnitten ist.

7. Beschlag nach einem oder mehreren der voraufgehenden Ansprüche 1 bis 5,
**dadurch gekennzeichnet,**
daß die Stange (30) einen im wesentlichen runden Querschnitt mit einer in dem Stangenkanal (28) geführten Längsphase oder Nut für eine entsprechende Abflachung oder Feder im Längskanal (28) aufweist.

8. Beschlag nach Ansprüchen 6 oder 7,
**dadurch gekennzeichnet,**
daß die Getriebeverbindung zwischen Stange (30) und erstem Kegelrad (36) selbsthemmend ist.

9. Beschlag nach einem oder mehreren der voraufgehenden Ansprüche,
**dadurch gekennzeichnet,**
daß die Vertiefung (40) eine Kegelabschnittwand zur Führung des zweiten Kegelrades (50) aufweist.

10. Beschlag nach einem oder mehreren Ansprüche 1 bis 9,
**dadurch gekennzeichnet,**
daß die Vertiefung (40) einen zentrisch festen Stift (41) zur Aufnahme einer zentrischen Öffnung (56) in der Stirnseite des zweiten Kegelrades (50) aufweist.

11. Beschlag nach Ansprüchen 1 bis 10,
**dadurch gekennzeichnet,**
daß das zweite Kegelrad als rotierender angetriebener Einsatz in eine elektrisch oder pneumatisch betriebene Handbohrmaschine einsetzbar ist.

12. Beschlag nach Ansprüchen 1 bis 11,
**dadurch gekennzeichnet,**
daß sich die Stange (30) in ihrer axialen Erstreckung vollständig durch den Beschlag hindurch erstreckt.

Fig. 2

54   40
22   22
41
III   III
44   42
20   10

Fig. 1

14   24   20   18   24   14
12   12
26
28
10   20   16

II

0 292 921

# Fig. 3

Fig. 4

# Fig. 5

0 292 921

# Fig. 6